# EUROPEAN PATENT APPLICATION

(11) **EP 1 764 898 A1**
(43) Date of publication of application: **21.03.2007**
(21) Application number: 06252141.4
(22) Date of filing: 20.04.2006
(51) Int. Cl.: H02K 3/34

(54) **Motor rotor having insulator including glass fiber**

(30) Priority: 16.09.2005 KR 20050086933
(71) Applicant: Sinhan Precision Ind. Co., Ltd., Yeongi-gun, Chungcheongnam-do (KP)
(72) Inventor: Oh, Sea Duk, Yuseong-gu, Daejeon-city (KP)
(74) Representative: Stuttard, Garry Philip

(57) **Abstract**

A motor rotor having an insulator coated on a contact surface of a core around which a coil is wound. The insulator is formed of plastic liquid on the exterior circumference of the core by insert molding, the plastic liquid including plastic and glass fiber heated and mixed at a ratio of 80-90% by weight to 10-20% by weight.

## Description

### CROSS-REFERENCE TO RELATED PATENT APPLICATION

This application claims the benefit of Korean Patent Application No. 10-2005-0086933, filed on September 16, 2005, in the Korean Intellectual Property Office, the disclosure of which is incorporated herein in its entirety by reference.

### BACKGROUND OF THE INVENTION

### 1. Field of the Invention

The present invention relates to a motor rotor having an insulator coated on a contact surface of a core around which a coil is wound. More particularly, the present invention relates to a motor rotor having an insulator formed of plastic liquid on the exterior circumference of an armature core by insert molding, the plastic liquid including plastic and glass fiber that are heated and mixed at a ratio of 80-90% by weight to 10-20% by weight, respectively.

### 2. Description of the Related Art

A conventional motor includes a stator fixed in a case and a rotor that rotates by an interaction with the stator upon receiving a current.

An electric coil is wound around the outer circumference of the rotor, and electromagnetism is induced by current flowing in the electrical coil. Hence, the rotor rotates axially with respect to the stator. It is important to insulate an armature core from the electrical coil in order to prevent the electrical coil from being electrically connected to the outside via a rotating shaft including the armature core. Accordingly, an insulation film is formed of a highly insulating material around the core.

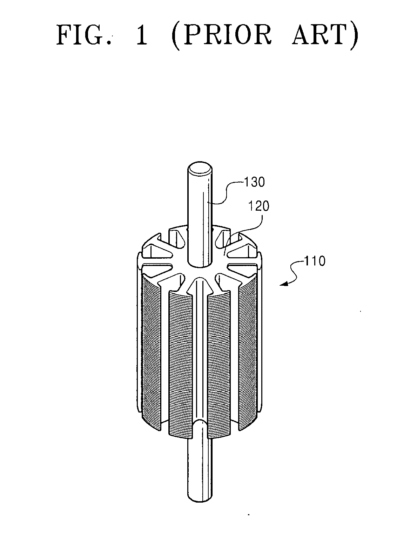

More specifically, as shown in FIG. 1, in a conventional rotor, a coil is wound around a core 110. When a current flows in the coil, a magnetic force is generated in the core 110, and thus the core 110 is polarized. The core 110 is formed by stacking a plurality of circular iron plates to form a cylinder. Each of the circular iron plates has a plurality of grooves formed along its circumference. A rotational shaft 130 is inserted into the central hole of the rotor 110 and fixed in the rotor 110. In particular, an insulator 120 is interposed between the core 110 and the coil. Here, the insulator 120 is coated on the surface of the core 110.

More specifically, fine insulating powder is coated on the surface of the core 110, and insulating powder on a portion of the surface of the core that is not covered by the coil is then removed. Next, the insulating power remaining on the core surface is completely attached thereto by heat, thereby coating the insulator 120 on a portion of the core surface that is covered by the coil. This process is called powder coating.

In the powder coating process, when a deposition device deposits fine insulating powder on the core, the fine insulating powder flies to the deposition device, such that the deposition device may frequently malfunction. Moreover, the fine insulating powder may be detached from the core due to the rotation of the core, thus badly affecting users' health and degrading the working environment. The fine insulating powder is formed of calcium carbonide, epoxy resin, anhydride, titanium dioxide, paint, silica, or phenol. In particular, epoxy resin is usually used. Coating using epoxy is referred to as epoxy powder coating.

Epoxy powder coating is environmentally harmful. Moreover, products like epoxy cannot sustain a high temperature or a high voltage and are easily damaged.

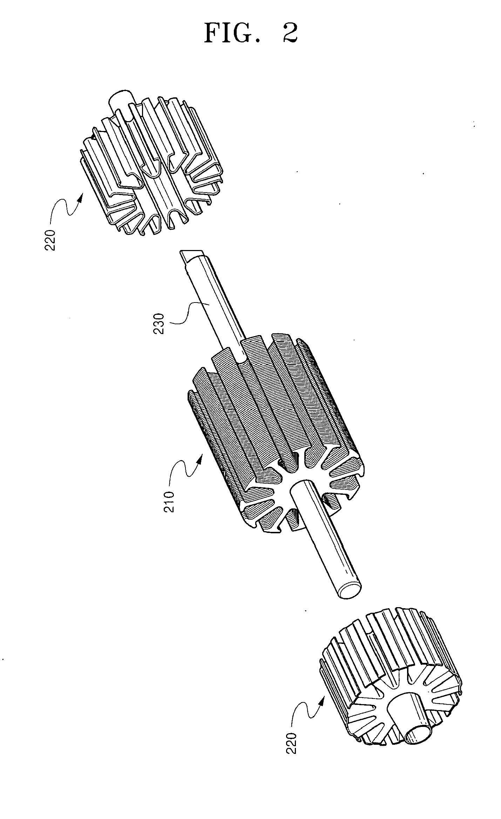

To address this problem, Korean Patent Publication No. 10-2005-0046359 (see FIG. 2) discloses a motor rotor having a mount-type insulator and a mount-type insulator therefor. As shown in FIG. 2, an insulator 220 is formed of a polyamide material relatively harmless to the human body and shaped in accordance with the shape of a core 210. The insulator 220 is fixed onto the surface of the core 210. Accordingly, the core 210 with the insulator 220 can be coated with the insulator 220 with a uniform thickness, and in some cases, the core 210 can be carried separated from a rotational shaft 230.

However, the invention disclosed in Korean Patent Publication No. 10-2005-0046359 has the following problems. Firstly, the insulator 220 is manufactured using a plastic injection method, in which a plastic injection mold must be formed and assembled in advance. Thus, this method is more complicated and time consuming than a method of directly coating an insulator around a core.

Secondly, the insulator 220 is made of a polyamide material of which insulating property varies with the temperature. That is, the insulating property of the insulator 220 is lower at high temperature, which greatly reduces the efficiency of a rotor rotating at high speed.

Thirdly, the insulator 220 should be manufacture with high accuracy. When the size of the insulator 220 is larger than the required size, the insulator 220 is loosely fitted onto the core 210, and thus, it can be easily separated from the core 210 when the rotor operates. On the other hand, when the size of the insulator 220 is smaller than the required size, the insulator 220 should be forcedly fit onto the core 210, which increases the time for manufacturing the motor rotor. Therefore, highly accurate insulators should be manufactured, which increases the production costs.

Fourthly, the mount-type insulator 220 is separately produced and then manually coupled to the core 210. However, it is difficult to completely combine the insulator 220 with the exterior surface of the core 210 made up of several steel sheets. Particularly, when a small gap exists between adjacent steel sheets of the core 210, current leaks out through the small gap, and thus the insulating property of the insulator 220 is lowered.

### SUMMARY OF THE INVENTION

The present invention provides a motor rotor having a mount-type insulator formed by epoxy powder coating.

The present invention also provides a highly efficient insulator integrally formed with a core by insert molding to manufacture a highly efficient core.

The present invention also provides an insulator formed of polyamide and glass fiber, the insulator thus having improved insulating property at high temperature.

According to the present invention, by integrally forming the insulator with the core by insert molding, there is not necessary to form a highly accurate insulator. Also, because the insulator is formed directly on the surface of the core, there are no fine gaps between the core and the insulator, so that leakage of current is prevented.

According to an aspect of the present invention, there is provided 1~4 claims.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a motor rotor formed using a conventional epoxy powder coating method;
FIG. 2 is a perspective view of a conventional motor rotor having a mount-type insulator;
FIG. 3 is a perspective view of a motor rotor according to an embodiment of the present invention;
FIG. 4 is a plan view of the motor rotor of FIG. 3; and
FIG. 5 is a cut-away view of the motor rotor of FIG. 3.

### DETAILED DESCRIPTION OF THE INVENTION

Hereinafter, the present invention will be described in detail by explaining preferred embodiments of the invention with reference to the attached drawings. Like reference numerals in the drawings denote like elements.

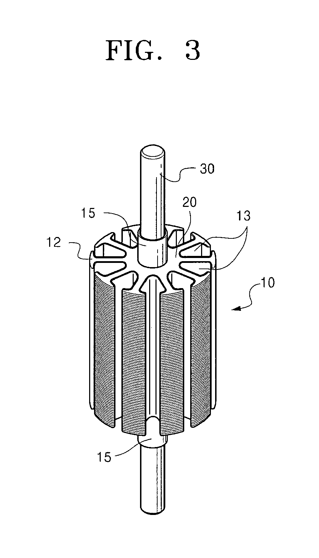

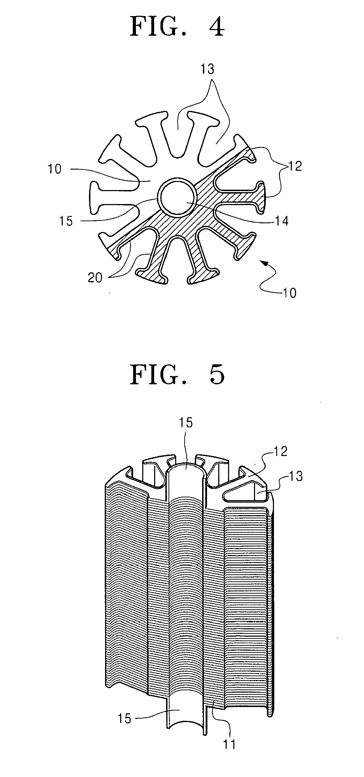

Referring to FIGS. 3 and 5, a motor rotor according to an embodiment of the present invention includes a core 10. The core 10 is formed by stacking a plurality of thin steel plates 11, for example, silicon steel plates having a good magnetic property and high resistivity. Each of the steel plates 11 has a circular base, at the center of which a hole 14 is formed. A plurality of slots 13 and a plurality of salient poles 12 are alternately spiraled at an outer circumference of each of the steel plates 11. The slots 13 and the salient poles 12 are spaced apart from each other at regular intervals. Salient pole surfaces for forming a magnetic field are formed on tips of the salient poles 12.

Referring to FIG. 4, an insulator 20 is coated on the surface of the core 10 except for the inner surface of the hole 14 and the salient pole surfaces of the salient poles 12. Namely, the insulator 20 is coated on a top surface of the steel plates 11 at the top of the core 10, a bottom surface of the steel plates 11 at the bottom of the core 10, and outer surfaces of the salient poles 12 that face the slots 13. A cylindrical extending support 15 extending from the top of the core 10 to the bottom thereof surrounds the outer circumference of the hole 14.

The insulator 20 is formed of polyamide and glass fiber. A percentage of the glass fiber in the insulator 20 is 10-20 % by weight.

The insulator 20 is coupled to the core 10 by insert molding.

More specifically, the core 10 is seated on a cavity (not shown) of a mold (not shown). The mold is well-known to one of ordinary skills in the art, and thus a description thereof will not be presented. A core mold (not shown) is inserted into the hole 14 of the core 10 to prevent the hole 14 from being filled with liquid insulator 20. The salient pole surfaces of the core 10 are closely adhered to the inner surface of the cavity. Gap sizes each equal to the thickness of the insulator 20 are kept between the top surface of the core 10 and the inner surface of the cavity, between the bottom surface of the core 10 and the inner surface of the cavity, and between the salient poles 12 and the inner surface of the cavity so as to be filled with the liquid insulator 20.

The cavity of the mold on which the core 10 is seated is filled with a liquid insulating material, for example, polyamide liquid mixed with glass fiber.

The liquid insulating material surrounds the entire surface of the core 10. The combination of the core 10 with the insulator 20 is taken out of the cavity of the mold, and the liquid insulator 20 is then hardened. In this way, the core 10 is integrally formed with the insulator 20. The extending support 15 is also integrally formed with the insulator 20 on the top end and bottom end of the insulator.

A rotating shaft 30 is inserted into the extending support 15 and the hole 14 of the core 10, whereby the motor rotor is completely manufactured.

As described above, the coupling of the core 10 and the insulator 20 is performed using a single process, that is, insert molding, and an operator has only to insert the rotating shaft 30 into the extending support 15 and the hole 14.

Thus, since the core 10 and the insulator 20 are integrally formed without the rotating shaft 30, the core 10 with the insulator 20 and the rotating shaft 30 can be separately kept or transported. Accordingly, the rotor is assembled into a motor after the rotating shaft 30 is inserted into the hole 14 of the core 10. In this way, since the rotor of FIG. 3 is manufactured using a simple assembling process, the manufacturing costs thereof are reduced compared with a conventional manufacturing technique. Also, the transportation costs of the rotor are reduced.

Due to the one-body coating structure of the insulator 20 which surrounds the entire surface of the core 10 excluding the ends of the salient poles 12, the insulating property of the core 10 is greatly improved. In particular, since glass fiber having an excellent insulating property is mixed with a polyamide material having a high mechanical strength and a high wear resistance, the insulating property of the rotor is not degraded even at a high temperature of about 140°C or greater.

As presented above, a percentage of the glass fiber in the insulator 20 is preferably 10-20% by weight, and more preferably, 12-14% by weight. According to experimental results regarding the insulating capability and strength of the rotor with the variation in the weight percentage of the glass fiber, when the percentage of the glass fiber exceeds the above range, the insulating capability at high temperature improves, but brittleness of the glass fiber increases, that is, the strength of the rotor decreases. Thus, the possibility that the rotor is destroyed even at a small impact increases. When the percentage of the glass fiber is less than the above range, the insulating capability of the rotor is not good at high temperature. Therefore, it is preferable that the percentage of the glass fiber be set to 10-20% by weight.

A characteristic feature of the present invention is that a non-fragile rotor having a good insulating property even at high temperature can be manufactured by using an insulator formed by mixing glass fiber in the aforementioned percentage with a polyamide liquid.

In the present embodiment, since the insulator 20 has a coating structure integrally formed with the core 10 by the aforementioned insert molding process, there are no fine gaps between the core 10 and the insulator 20. Hence, current leakage can be completely prevented.

To ascertain the detailed characteristic differences between a rotor manufactured using a conventional technique and the rotor of the present invention, the following experiment was conducted.

### 1. Experimental conditions

A withstand voltage test depending on a temperature variation and an insulation resistance test depending on a temperature change were performed. Operating voltages used in the experiment were 500V, 1000V, and 1500V, and the temperature was 27°C to 160°C.

Rotors used in the experiment were Rotor 1 (see FIG.1) formed by epoxy powder coating, Rotor 2 (see FIG. 2) having the core 210 on which the mount-type insulator 220 formed only of polyamide is fitted, and Rotor 3 (see FIG. 3) having the insulator 20 formed of polyamide and glass fiber by insert molding, wherein the percentage of the glass fiber in the insulator 20 is 13% by weight.

The term "low" in the following tables indicates that one of the Rotors 1, 2, or 3 does not have good efficiency when used in a motor.

### 2. Experiment results

### (1) Withstand voltage tests according to temperature change

### 1) Withstand voltage test at 500V

| (Unit: mA) | | | |
|---|---|---|---|
| Temperature (°C) | Rotor 1 | Rotor 2 | Rotor 3 |
| 27 | 0.09 | 0.07 | 0.07 |
| 40 | 0.1 | 0.07 | 0.07 |
| 60 | 0.12 | 0.08 | 0.08 |
| 80 | 0.17 | 0.08 | 0.08 |
| 100 | 0.64 | 0.09 | 0.09 |
| 120 | 1.05 | 0.09 | 0.09 |
| 140 | 0.63 | 0.1 | 0.1 |
| 160 | 0.62 | 0.12 | 0.11 |

### 2) Withstand voltage test at 1000V

| (Unit: mA) | | | |
|---|---|---|---|
| Temperature (°C) | Rotor 1 | Rotor 2 | Rotor 3 |
| 27 | 0.2 | 0.14 | 0.13 |
| 100 | 3.5 | 0.25 | 0.19 |
| 160 | 3 | 0.37 | 0.35 |

### 3) Withstand voltage test at 1500V

| (Unit: mA) | | | |
|---|---|---|---|
| Temperature (°C) | Rotor 1 | Rotor 2 | Rotor 3 |
| 140 | Low | Low | 1.05 |

### (2) Insulation resistance tests according to temperature change

### 1) Insulation resistance test at 500V

| (Unit: MΩ) | | | |
|---|---|---|---|
| Temperature (°C) | Rotor 1 | Rotor 2 | Rotor 3 |
| 27 | 200 | ∞ | ∞ |
| 40 | 100 | ∞ | ∞ |
| 60 | 40 | ∞ | ∞ |
| 80 | 16 | ∞ | ∞ |
| 100 | 7 | ∞ | ∞ |
| 120 | 1.3 | 900 | ∞ |
| 140 | 2.5 | 200 | ∞ |
| 160 | 3 | 60 | ∞ |

### 2) Insulation resistance test at 1000V

| (Unit: MΩ) | | | |
|---|---|---|---|
| Temperature (°C) | Rotor 1 | Rotor 2 | Rotor 3 |
| 27 | 40 | ∞ | ∞ |
| 100 | 3 | 2000 | ∞ |
| 160 | 2 | 50 | 900 |

### (3) Conclusions

According to the results of the withstand voltage tests, withstand voltages does not vary much at room temperature. However withstand voltages varies much at high temperature. In the case of Rotor 3 the withstand voltage is almost constant, and a motor having Rotor 3 has good efficiency even as the temperature increases. Rotors 1 and 2 have low efficiency at 140 °C and 1500V that is too low to lose their functions.

According to the results of the insulation resistance tests, in the case of Rotor 1 at 500V, the insulation efficiency decreases with an increase in temperature. In the case of Rotor 2 at 500V, the insulation property is pretty good at room temperature, but significantly decreases at high temperatures. At 160 °C, Rotor 2 has an insulation property so small so that it cannot be used. At 1000V, Rotor 1 has very low insulation resistance even at room temperature. In the case of Rotor 2, the insulating property is stable until 100°C, but greatly decreases at 100°C or higher temperatures.

At 1000V, Rotor 3 has a stable insulating property across the entire temperature range. Although the insulating property of Rotor 3 is slightly low at 160°C, the insulating property is in a range that allows Rotor 3 to be effectively used in a motor. Of course, the percentage of the glass fiber may be increased to improve the insulating property at 160°C. However, in this case, the strength of the insulator may decrease as described above.

Consequently, as seen from the experimental results, Rotor 3, the insulator of which includes 13% by weight of glass fiber, provides good insulation capability at high temperature compared with Rotor 1, which was formed by epoxy powder coating, and Rotor 2, which has a mount-type insulator formed only of polyamide.

While a motor rotor according to the present invention has been particularly shown and described with reference to the embodiment of FIGS. 3 through 5, the core mentioned in the embodiment may be changed to have various forms. Therefore, a change of the shape of the core, while keeping the percentage of glass fiber in the insulator as mentioned in the embodiment, should be interpreted as belonging to the scope of the present invention.

In the present invention, instead of using conventional technique of fitting a mount-type insulator onto a core, an insulator is integrally formed on the core by insert molding. Therefore, a highly efficient core can be produced with a small number of processes compared to the conventional technique.

Also, since the insulator is formed of polyamide and glass fiber, environmental pollution is reduced, and a degradation of the insulating property of the insulator at high temperature is prevented.

Moreover, since the insulator is integrally formed on the core by insert molding, it is not necessary that the size and shape of the insulator are very accurate as in the conventional technique, and thereby the manufacturing costs of a rotor are reduced. Also, since there are no fine gaps between the core and the insulator, leakage of current is prevented, thereby increasing the efficiency of a motor having the rotor of the present invention.

## Claims

1. A motor rotor, comprising:
a core formed by stacking a plurality of thin steel plates, each of the steel plates having a plurality of slots and a plurality of salient poles that are alternately spiraled;
a plurality of coils wound around the salient poles via the slots of the steel plates; and
an insulator coated on the entire surface of the core and integrally formed with the core,
wherein the insulator is formed of polyamide and glass fiber, and the percentage of the glass fiber is 10-20% by weight.

2. The motor rotor of claim 1, wherein an extending support is integrally formed on a top end and a bottom end of the insulator.

3. The motor rotor of claim 1 or 2, wherein the percentage of the glass fiber is 12-14% by weight.

4. The motor rotor of any one of claims 1, 2, and 3, wherein the core and the insulator are integrally formed by insert molding.
